(19) Europäisches Patentamt

European Patent Office

Office européen des brevets

(11) **EP 1 476 977 B1**

(12) **EUROPÄISCHE PATENTSCHRIFT**

(45) Veröffentlichungstag und Bekanntmachung des Hinweises auf die Patenterteilung:
**19.10.2005 Patentblatt 2005/42**

(21) Anmeldenummer: 03708009.0

(22) Anmeldetag: **24.01.2003**

(51) Int Cl.⁷: **H04L 1/00**

(86) Internationale Anmeldenummer:
**PCT/DE2003/000198**

(87) Internationale Veröffentlichungsnummer:
**WO 2003/071729 (28.08.2003 Gazette 2003/35)**

(54) **HARDWARE-SCHALTUNG ZUR PUNKTIERUNG UND WIEDERHOLUNGSCODIERUNG VON DATENSTRÖMEN UND VERFAHREN ZUM BETRIEB DER HARDWARE-SCHALTUNG**

HARDWARE CIRCUIT FOR THE PUNCTURING AND REPETITIVE CODING OF DATA STREAMS AND A METHOD FOR OPERATING SAID HARDWARE CIRCUIT

CIRCUIT MATERIEL DESTINE A LA PERFORATION ET AU CODAGE REPETITIF DE FLUX DE DONNEES ET PROCEDE DE FONCTIONNEMENT DE CE CIRCUIT

(84) Benannte Vertragsstaaten:
**DE FR GB**

(30) Priorität: **20.02.2002 DE 10207146**

(43) Veröffentlichungstag der Anmeldung:
**17.11.2004 Patentblatt 2004/47**

(73) Patentinhaber: **Infineon Technologies AG
81669 München (DE)**

(72) Erfinder: **SPETH, Michael
40239 Düsseldorf (DE)**

(74) Vertreter: **Lange, Thomas et al
Patentanwälte
Lambsdorff & Lange,
Dingolfinger Strasse 6
81673 München (DE)**

(56) Entgegenhaltungen:
**WO-A-01/05059        WO-A-02/05445
US-A- 5 566 189**

**Beschreibung**

Die Erfindung betrifft eine Vorrichtung zur Punktierung und Wiederholung von Bits eines Datenstroms sowie ein Verfahren, mittels welchem die Hardware-Schaltung betrieben werden kann.

Das Auslassen von Bits in einem Datenstrom wird als Punktierung bezeichnet (englisch: puncturing). Das Wiederholen einzelner Bits eines Datenstroms wird Wiederholungscodierung (englisch: repetitive coding) genannt.

Es ist bekannt, zur Punktierung oder Wiederholungscodierung von Datenströmen Punktierungs- oder Wiederholungsmasken zu verwenden, mit denen einer vorgegebenen Anzahl von Bits eines Datenstroms pro Takt ein festes Punktierungs- oder Wiederholungsmuster aufgeprägt wird. Jedoch ist bei der Verwendung einer derartigen starren Maske das Punktierungs- oder Wiederholungsmuster nicht veränderbar, sodass bei jeder Veränderung des Musters eine neue Maske benötigt wird. Größere Flexibilität hinsichtlich der Variabilität der Punktierungs- und Wiederholungsmuster bieten Digitalsignalprozessoren (DSP). Allerdings ist bei einer auf einem Digitalsignalprozessor ausgeführten reinen Software-Lösung der benötigte Rechenaufwand relativ groß, da für jede Verarbeitung eines Bits mehrere Rechenoperationen notwendig sind.

Aus der Anmeldung WO 01/05059 A1 ist eine Vorrichtung zum Ratenabgleich von Datenströmen mit einem Demultiplexer, parallelen Vorrichtungen zum Punktieren oder Wiederholungscodieren, sowie einem Multiplexer bekannt. Der Demultiplexer ordnet die verschiedenen im einlaufenden Datenstrom enthaltenen Komponenten (z.B. Daten- oder Prüfsymbole) den verschiedenen parallelen Zweigen der Vorrichtung zu. Nach Ratenabgleich der Komponenten-Datenströme in den einzelnen Zweigen durch Punktierung oder Wiederholungscodierung anhand eines festen Punktierungs- oder Wiederholungsmusters werden die Bits im Multiplexer wieder zu einem gemeinsamen Datenstrom vereint.

Aufgabe der Erfindung ist es daher, eine Vorrichtung zur Punktierung und Wiederholungscodierung von Datenwörtern und insbesondere von Datenströmen zu schaffen, welche die Verwendung veränderbarer Punktierungs- und Wiederholungsmuster ermöglicht und welche eine hohe Datenverarbeitungsgeschwindigkeit aufweist. Des Weiteren soll ein Verfahren angegeben werden, mit welchem sich die erfindungsgemäße Vorrichtung betreiben lässt.

Die der Erfindung zugrunde liegende Aufgabenstellung wird durch die Merkmale der Patentansprüche 1 und 8 gelöst. Vorteilhafte Weiterbildungen und Ausgestaltungen der Erfindung sind in den Unteransprüchen angegeben.

Eine erfindungsgemäße Vorrichtung dient zur Umwandlung eines mehrere Bits umfassenden Eingangsdatenworts in ein Ausgangsdatenwort und zur Ausgabe des Ausgangsdatenworts. Dazu gehen mehrere Eingangsdatenwörter als ein Eingangsdatenblock in die Vorrichtung ein. Ebenso werden die Ausgangsdatenwörter als Ausgangsdatenblock aus der Vorrichtung ausgegeben. Mindestens ein Ausgangsdatenwort des Ausgangsdatenblocks weist im Vergleich zu dem zugehörigen Eingangsdatenwort mindestens eine Punktierung, d.h. die Auslassung eines Bits des ursprünglichen Eingangsdatenworts, oder mindestens eine Wiederholung mindestens eines Bits des Eingangsdatenworts auf. Die Vorrichtung umfasst zu diesem Zweck eine Zuordnungseinheit, welche die Bits eines Eingangsdatenworts den Bits des zugehörigen Ausgangsdatenworts anhand eines veränderbaren Punktierungs- oder Wiederholungsmusters zuordnet. Die Zuordnungseinheit ist eine festverdrahtete Schaltung, die zur Ausführung sowohl einer Punktierung als auch einer Wiederholungscodierung ausgelegt ist.

Die erfindungsgemäße Vorrichtung bietet den Vorteil, dass mit ihr wahlweise die Punktierung oder die Wiederholungscodierung von Datenwörtern durchgeführt werden kann, wobei die verwendeten Punktierungs- oder Wiederholungsmuster variabel sind. Trotz dieser Flexibilität weist die erfindungsgemäße Vorrichtung im Vergleich zu einer auf einem Digitalsignalprozessor ausgeführten softwaremäßigen Punktierung oder Wiederholungscodierung aufgrund der Hardware-Ausführung eine höhere Datenverarbeitungsgeschwindigkeit auf.

Gemäß einer besonders vorteilhaften Ausgestaltung der Erfindung enthält die Zuordnungseinheit eine Mehrzahl von Zuordnungselementen, welche jeweils einen logischen Eingang und einen logischen Ausgang aufweisen. Die Zuordnungselemente erstellen eine Zuordnung zwischen einem Bit eines Eingangsdatenworts und einem oder keinem Bit des zugehörigen Ausgangsdatenworts. Die Anzahl der Zuordnungselemente gibt folglich die Zahl der Bits an, die von der erfindungsgemäßen Vorrichtung pro Verarbeitungszyklus verarbeitet werden können. Durch eine geeignete Wahl der Anzahl der Zuordnungselemente lässt sich die Datenverarbeitungsgeschwindigkeit optimal den Systemerfordernissen anpassen.

Bei einer Implementierung der erfindungsgemäßen Vorrichtung können die Zuordnungselemente beispielsweise als eine Kaskade von Multiplexern, welche Daten und Adressen miteinander verschalten, realisiert werden.

Eine weitere besonders vorteilhafte Ausgestaltung der Erfindung sieht vor, dass die erfindungsgemäße Vorrichtung eine Steuereinheit, eine erste Adressgenerierungseinheit sowie eine zweite Adressgenerierungseinheit umfasst. Die Steuereinheit generiert aus vorgegebenen Punktierungs- oder Wiederholungsinformationen das Punktierungs- oder Wiederholungsmuster. Das Punktierungs- oder Wiederholungsmuster wird der ersten Adressgenerierungseinheit zugeführt, welche daraus erste Adressen erzeugt. Die zweite Adressgenerierungseinheit erzeugt zweite Adressen. Sofern die erfindungsgemäße Vorrichtung als Punktierungsvorrichtung betrieben wird, dienen die ersten Adressen den logischen Ausgängen der Zuordnungselemente zur jeweiligen Zuordnung zu einem Bit des Ausgangsdatenworts. Die zweiten Adressen werden in diesem Fall dazu verwendet, die logischen Eingänge der Zuordnungselemente fortlaufend zu jeweils einem Bit des Eingangsdatenworts zuzuordnen. Sofern die erfindungsgemäße Vorrichtung als Wiederholungsvorrichtung genutzt wird, dienen die ersten Adressen den logischen Eingängen der Zuordnungselemente zur jeweiligen Zuordnung zu einem Bit des Eingangsdatenworts. In diesem Fall stellen die zweiten Adressen eine Zuordnung zwischen den Ausgängen der Zuordnungselemente zu den Bits des Ausgangsdatenworts in fortlaufender Weise dar.

Durch den vorstehend beschriebenen Aufbau der erfindungsgemäßen Vorrichtung lassen sich die vorgegebenen Punktierungs- oder Wiederholungsinformationen besonders einfach in die Punktierung oder Wiederholungscodierung eines Datenworts umsetzen. Bei veränderten Punktierungs- oder Wiederholungsvorgaben muss von der Steuereinheit lediglich ein neues Punktierungs- oder Wiederholungsmuster generiert werden, sodass anschließend neue erste Adressen von der ersten Adressgenerierungseinheit erzeugt werden können. Gegenüber dem Stand der Technik entfällt dadurch ein bislang eventuell notwendiges Austauschen von Hardware-Elementen.

Vorteilhafterweise umfasst die erfindungsgemäße Vorrichtung einen Eingangsspeicher, in welchem mindestens ein Eingangsdatenwort zur Zwischenspeicherung abgelegt werden kann, und/oder einen Ausgangsspeicher, in welchem mindestens ein Ausgangsdatenwort zwischengespeichert werden kann. Insbesondere sind der Eingangsspeicher und der Ausgangsspeicher jeweils in Form einer Mehrzahl von Registern ausgelegt, in welchen jeweils ein Bit abgespeichert werden kann. Die ersten und zweiten Adressen ordnen die Zuordnungselemente den jeweiligen Registern des Eingangs- und des Ausgangsspeichers zu.

Des Weiteren ist es von Vorteil, wenn dem Eingangsspeicher ein erster wiederbeschreibbarer Speicher zur Speicherung von Eingangsdaten vorgeschaltet ist und/oder dem Ausgangsspeicher ein zweiter wiederbeschreibbarer Speicher zur Speicherung von Ausgangsdaten nachgeschaltet ist. Die wiederbeschreibbaren Speicher ermöglichen es, Datenströme mit der erfindungsgemäßen Vorrichtung zu verarbeiten. Einlaufende Eingangsdatenblöcke werden in dem ersten wiederbeschreibbaren Speicher so lange zwischengespeichert, bis die Zuordnungseinheit zu ihrer Verarbeitung bereit ist. Mittels des zweiten wiederbeschreibbaren Speichers können die verarbeiteten Daten als Ausgangsdatenblöcke ausgegeben werden.

Eine besonders vorteilhafte Ausgestaltung der Erfindung ist dadurch gekennzeichnet, dass die Zuordnungseinheit eine Mehrzahl von Steuereinheiten aufweist. Diese Maßnahme erlaubt es, ineinander verschachtelte Datenströme mit der erfindungsgemäßen Vorrichtung zu verarbeiten. Jedem Datenstrom kann dadurch beispielsweise ein eigenes Punktierungs- oder Wiederholungsmuster zugeordnet werden.

Vorzugsweise liegen die Steuereinheiten, die erste Adressgenerierungseinheit und die zweite Adressgenerierungseinheit jeweils festverdrahtet vor. Allgemein ist jedoch auch eine softwaremäßige Realisierung dieser Einheiten möglich.

Des Weiteren kann vorzugsweise vorgesehen sein, dass die Steuereinheit oder gegebenenfalls die Mehrzahl von Steuereinheiten ein oder mehrere Punktierungs- oder Wiederholungsmuster nach dem UMTS-Standard 3GPP TS 25.212 erzeugen.

Die erfindungsgemäße Vorrichtung kann mittels des erfindungsgemäßen Verfahrens betrieben werden. Dabei wird die Vorrichtung in Zyklen k (k = 0, 1, 2,...) betrieben. Von der Steuereinheit werden in jedem Zyklus k Steuersignale $inc_w(k)$ erzeugt. Die Anzahl der pro Zyklus k erzeugten Steuersignale $inc_w(k)$ beträgt Wmax. Von der ersten Adressgenerierungseinheit wird in jedem Zyklus k eine erste Adresse $pd_w(k)$ für jedes Zuordnungselement MUXw erzeugt. Jeder Zyklus k wird mittels einer ersten Initialisierungsadresse $pd_{ini}(k)$ initialisiert. Die Anzahl der Zuordnungselemente MUXw der Vorrichtung beträgt Wmax (w = 0, 1,..., Wmax-1). Das Eingangsdatenwort weist Lmax Bits auf. Die Berechnung der ersten Adressen $pd_w(k)$ erfolgt nach folgender rekursiver Vorschrift:

$$pd_0(k) = pd_{ini}(k) \tag{1}$$

$$pd_w(k) = (pd_{w-1}(k) + inc_{w-1}(k)) \bmod Lmax \tag{2}$$

$$pd_{ini}(k+1) = (pd_{Wmax-1}(k) + inc_{Wmax-1}(k)) \bmod Lmax \tag{3}$$

$$pd_{ini}(0) = 0 \tag{4}$$

Durch das Steuersignal $inc_w(k)$ wird die Verarbeitung des an dem Eingang des Zuordnungselements MUXw anliegenden Bits bestimmt. Sofern das Steuersignal $inc_w(k)$ gleich Null ist, wird dadurch angegeben, dass das an dem Eingang des Zuordnungselements MUXw anliegende Bit punktiert bzw. wiederholt werden soll. Ist das Steuersignal $inc_w(k)$ gleich Eins, wird das an dem Eingang des Zuordnungselements MUXw anliegende Bit weder punktiert noch wiederholt und somit gleichbleibend übertragen. Damit bei der Punktierung des an dem Eingang des Zuordnungselements MUXw anliegenden Bits die logischen Ausgänge der Zuordnungselemente MUXw und MUX(w+1) nicht gleichzeitig einem Bit des Ausgangsdatenworts zugeordnet werden, wird in diesem Fall der logische Ausgang des Zuordnungselements MUXw deaktiviert.

Aufgrund der rekursiven Berechnung der ersten Adressen $pd_w(k)$ ergibt sich ein Rechenaufwand von Wmax Additionen für die Berechnung aller ersten Adressen $pd_w(k)$ in einem Zyklus k. Bei einer hardwaremäßigen Realisierung der ersten Adressgenerierungseinheit sind folglich nur Wmax Addierer und ein entsprechend geringer Flächenbedarf erforderlich.

Die zweiten Adressen $ps_w(k)$, die in jedem Zyklus k von der zweiten Adressgenerierungseinheit für jedes Zuordnungselement MUXw erzeugt werden, können vorteilhafterweise nach folgender rekursiver Vorschrift berechnet werden:

$$ps_0(k) = ps_{ini}(k) \qquad (5)$$

$$ps_w(k) = (ps_{w-1}(k) + 1) \bmod Lmax \qquad (6)$$

$$ps_{ini}(k+1) = (ps_{Wmax-1}(k) + 1) \bmod Lmax \qquad (7)$$

$$ps_{ini}(0) = 0 \qquad (8)$$

Dabei gibt $ps_{ini}(k)$ eine zweite Initialisierungsadresse an, welche zur Initialisierung des Zyklus k Verwendung findet.

Die Erfindung wird nachfolgend unter Bezugnahme auf die Zeichnungen näher erläutert. In diesen zeigen:

Fig. 1    ein schematisches Schaltbild eines erstes Ausführungsbeispiels der erfindungsgemäßen Vorrichtung;

Fig. 2    einen detaillierteren Ausschnitt aus dem in Fig. 1 gezeigten schematischen Schaltbild;

Fig. 3    Architekturen bzw. hardwaremäßige Implementierungen eines Algorithmus zur Erzeugung des Punktierungs- oder Wiederholungsmusters nach dem UMTS-Standard 3GPP TS 25.212 und der Adressgenerierungseinheit 5;

Fig. 4    ein schematisches Schaltbild eines zweiten Ausführungsbeispiels der erfindungsgemäßen Vorrichtung;

Fig. 5    einen detaillierteren Ausschnitt aus dem in Fig. 4 gezeigten schematischen Schaltbild; und

Fig. 6    ein schematisches Schaltbild eines Ausführungsbeispiels der Zuordnungselemente MUXw.

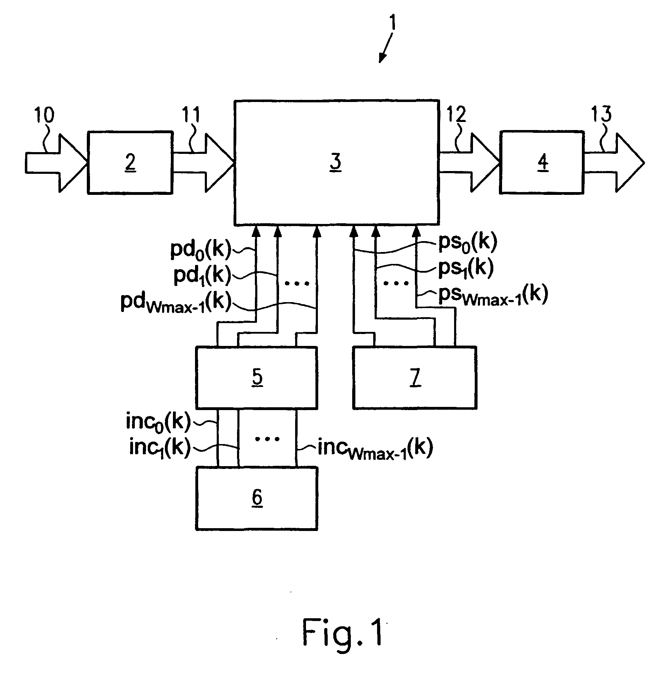

In Fig. 1 ist ein schematisches Schaltbild eines ersten Ausführungsbeispiels der erfindungsgemäßen Vorrichtung 1 gezeigt. Daten, welche in einem Datenstrom 10 in die Vorrichtung 1 eingehen, werden in einem Eingangsspeicher 2 zwischengespeichert. Die Daten gehen dabei als Datenblöcke in die Vorrichtung 1 ein. Jeweils ein Datenblock enthält mehrere Datenwörter. Aus dem Eingangsspeicher 2 werden die Daten als Datenwörter 11 von einer Punktierungs-/Wiederholungseinheit 3 zyklisch abgerufen. Nach der Verarbeitung in der Punktierungs-/Wiederholungseinheit 3 werden die verarbeiteten Daten als Datenwörter 12 einem Ausgangsspeicher 4 zugeführt und anschließend als Datenblöcke in einem Datenstrom 13 aus der Vorrichtung 1 ausgegeben.

In der Punktierungs-/Wiederholungseinheit 3 werden Daten in jedem Verarbeitungszyklus k (k = 0, 1, 2,...) mit einem Punktierungs- oder Wiederholungsmusters beaufschlagt. Das jeweilige Punktierungs- oder Wiederholungsmuster liegt in einer Steuereinheit 6 vor oder wird durch diese anhand von ihr zugeführten Informationen erzeugt. Die Steuereinheit 6 generiert Steuersignale $inc_w(k)$, welche die Werte 0 oder 1 annehmen können (w = 0, 1,..., Wmax-1). Dabei gilt die Konvention, dass $inc_w(k) = 0$ die Punktierung oder die Wiederholung eines bestimmten Bits angibt. Demgegenüber besagt die Vorschrift $inc_w(k) = 1$, dass das Bit weder punktiert noch wiederholt werden soll. Pro Verarbeitungszyklus k können von der Punktierungs-/Wiederholungseinheit 3 maximal Wmax Bits verarbeitet werden. Daher gibt die Steuereinheit 6 pro Verarbeitungszyklus k Wmax Steuersignale $inc_w(k)$ aus.

Die Steuersignale $inc_w(k)$ werden einer Adressgenerierungseinheit 5 zugeführt, welche anhand der Steuersignale $inc_w(k)$ Adressen $pd_w(k)$ generiert. Eine Adressgenerierungseinheit 7 erzeugt Adressen $ps_w(k)$. Sowohl die Adressen $pd_w(k)$ als auch die Adressen $ps_w(k)$ speisen die Punktierungs-/Wiederholungseinheit 3. Die Funktionen der Adressen $pd_w(k)$ und $ps_w(k)$ werden nachfolgend erläutert.

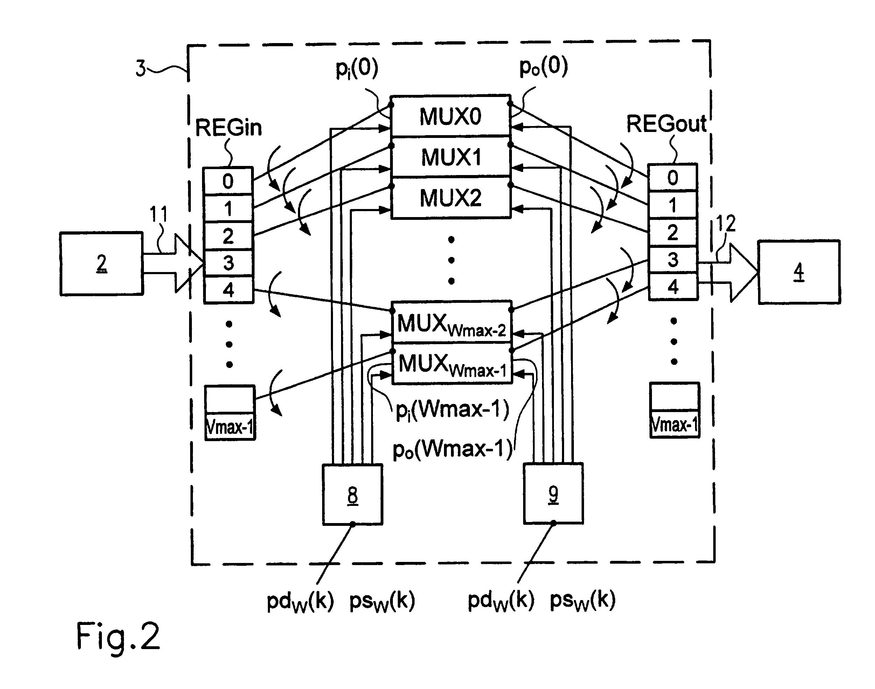

In Fig. 2 ist die Punktierungs-/Wiederholungseinheit 3 detaillierter dargestellt. Die Punktierungs-/Wiederholungseinheit 3 enthält eine Eingangsregistereinheit REGin, eine Ausgangsregistereinheit REGout sowie zwischen den Registereinheiten REGin und REGout angeordnete Zuordnungselemente MUXw (w = 0, 1,..., Wmax-1). Die Eingangsregistereinheit REGin und die Ausgangsregistereinheit REGout umfassen jeweils Vmax Register, in denen jeweils ein Bit abgelegt werden kann. Die Anzahl der Zuordnungselemente MUXw beträgt Wmax. Jedes Zuordnungselement MUXw weist einen logischen Eingang und einen logischen Ausgang auf. Die logischen Eingänge können den Registern der Eingangsregistereinheit REGin zugeordnet werden. Die logischen Ausgänge können den Registern der Ausgangsregistereinheit REGout zugeordnet werden. Für diese Zuordnungen weisen die Eingänge der Zuordnungselemente MUXw Eingangsadressen $p_i(w)$, und die Ausgänge der Zuordnungselemente MUXw Ausgangsadressen $p_o(w)$ auf. Den Eingangsadressen $p_i(w)$ bzw. den Ausgangsadressen $p_o(w)$ können entweder die Adressen $pd_w(k)$ oder die Adressen $ps_w(k)$ zugewiesen werden. Dazu sind zwei Schalteinheiten 8 und 9 vorgesehen, die je nach Betriebsart geschaltet werden. Im Falle einer Punktierung werden die Adressen $pd_w(k)$ den Ausgangsadressen $p_o(w)$ der Zuordnungselemente MUXw zugewiesen, und die Adressen $ps_w(k)$ werden den Eingangsadressen $p_i(w)$ der Zuordnungselemente MUXw zugeordnet. Im Falle einer Wiederholungscodierung werden die Adressen $pd_w(k)$ den Eingangsadressen $p_i(w)$ der Zuordnungselemente MUXw zugewiesen, und die Adressen $ps_w(k)$ werden den Ausgangsadressen $p_o(w)$ der Zuordnungselemente MUXw zugeordnet. Während die Adressen $pd_w(k)$ durch das Punktierungs- oder Wiederholungsmuster bestimmt sind, sind die Adressen $ps_w(k)$ derart ausgelegt, dass sie die Eingänge oder Ausgänge der Zuordnungselemente MUXw in einer fortlaufenden Weise mit Registern der Eingangsregistereinheit REGin oder mit Registern der Ausgangsregistereinheit REGout verbinden. Die Adressen $ps_w(k)$ können in der Adressgenerierungseinheit 7 beispielsweise von einem Zähler erzeugt werden.

Da die Adressen $pd_w(k)$ mittels der Steuersignale $inc_w(k)$ erzeugt werden, gibt das Steuersignal $inc_w(k)$ im Fall $inc_w(k) = 0$ an, dass das an dem logischen Eingang des Zuordnungselements MUXw anliegende Bit punktiert bzw. wiederholt werden soll. Gilt dagegen $inc_w(k) = 1$, so wird das an dem logischen Eingang des Zuordnungselements MUXw anliegende Bit weder punktiert noch wiederholt.

Bei einer vorgesehenen Punktierung des an dem logischen Eingang des Zuordnungselements MUXw anliegenden Bits wird dieses Bit von dem an dem logischen Eingang des Zuordnungselements MUX(w+1) anliegenden Bit überschrieben. Damit dabei die logischen Ausgänge der Zuordnungselemente MUXw und MUX(w+1) nicht gleichzeitig einem Register der Ausgangsregistereinheit REGout zugeordnet werden, wird der Ausgang des Zuordnungselements MUXw für diese Punktierung in geeigneter Weise gesperrt.

Eine Wiederholung des an dem logischen Eingang des Zuordnungselements MUXw anliegenden Bits wird dadurch erzielt, dass die Eingangsadresse $p_i(w+1)$ des Zuordnungselement MUX(w+1) gleich der Eingangsadresse $p_i(w)$ des Zuordnungselements MUXw gesetzt wird.

Die Register der Eingangsregistereinheit REGin werden in einem Verarbeitungszyklus k teilweise durch die von den Zuordnungselementen MUXw durchgeführten Zuordnungen entleert. In dem nachfolgenden Verarbeitungszyklus k+1 werden die Register der Eingangsregistereinheit mit Daten aus dem Eingangsspeicher 2 aufgefüllt. In dem vorliegenden ersten Ausführungsbeispiel kann von den Zuordnungselementen MUXw in einem Verarbeitungszyklus k ein Datenwort mit einer maximalen Wortbreite von Wmax verarbeitet werden. Damit während jedes Verarbeitungszyklus k in der Eingangsregistereinheit REGin ausreichend Bits für die Verarbeitung vorliegen, muss die Zahl Vmax der Register der Eingangsregistereinheit REGin mindestens das Doppelte von Wmax betragen. Dann ist ein kontinuierlicher Betrieb der Vorrichtung 1 gewährleistet. Ist jedoch auch ein nicht-kontinuierlicher Betrieb der Vorrichtung 1 akzeptabel, so kann Vmax kleiner gewählt werden.

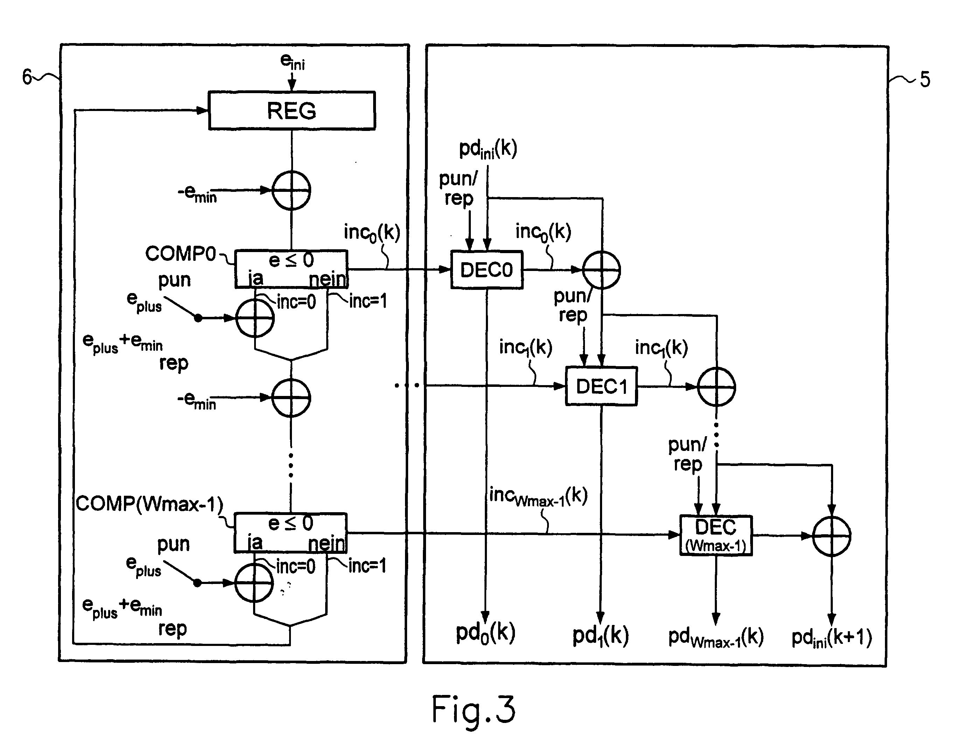

Fig. 3 zeigt die Architekturen bzw. die hardwaremäßigen Implementierungen sowohl eines Algorithmus zur Erzeugung des Punktierungs- oder Wiederholungsmusters als auch der Adressgenerierungseinheit 5. Der hier zur Mustererzeugung implementierte Algorithmus ist im UMTS-Standard 3GPP TS 25.212 V4.0.0 im Abschnitt 4.2.7.5 angegeben. Dieser Abschnitt des UMTS-Standards wird hiermit in den Offenbarungsgehalt der vorliegenden Patentanmeldung aufgenommen. Bei einer anweisungsorientierten Betrachtung der in Fig. 3 dargestellten Struktur kann diese auch als Ablaufdiagramm zur Veranschaulichung eines Ausführungsbeispiels des erfindungsgemäßen Verfahrens, mit welchem eine erfindungsgemäße Vorrichtung betrieben werden kann, interpretiert werden. Dabei ist zum einen beispielhaft ein Algorithmus dargestellt, mittels welchem die Steuereinheit 6 in jedem Verarbeitungszyklus k die Steuersignale $inc_w(k)$ berechnet. Zum anderen veranschaulicht das Ausführungsbeispiel in Fig. 3 das Verfahren, welches in der Adressgenerierungseinheit 5 abläuft und welches zum Errechnen der Adressen $pd_w(k)$ aus den Steuersignalen $inc_w(k)$ dient.

Bei der ersten Aktivierung (k = 0) der Steuereinheit 6 wird ein Register REG mit einem Initialisierungswert $e_{ini}$ vorinitialisiert. Anschließend werden pro Verarbeitungszyklus k Wmax Steuersignale $inc_w(k)$ berechnet. Dazu wird zunächst von dem Initialisierungswert $e_{ini}$ ein Wert $e_{min}$ subtrahiert und das Ergebnis einem Komparator COMP0 als Eingangswert zugeführt. Der Komparator COMP0 erzeugt als Ausgangssignal das Steuersignal $inc_0(k)$. Ferner wird in dem Komparator COMP0 geprüft, ob der ihm zugeführte Eingangswert kleiner oder gleich Null ist. In Abhängigkeit von dem Ergebnis dieser Überprüfung führt der Komparator COMP0 eine Verzweigung der weiteren Verarbeitung durch. Für den Fall, dass der Eingangswert des Komparators COMP0 kleiner oder gleich Null ist, wird das Signal an dem betreffenden Ausgang des Komparators COMP0 auf den Wert Null gesetzt und anschließend werden auf dieses Signal bei einer Punktierung ein Wert $e_{plus}$ addiert und bei einer Wiederholungscodierung die Werte $e_{plus}$ und $e_{min}$ addiert. Falls der Eingangswert des Komparators COMP0 größer Null ist, wird das Signal an dem betreffenden Ausgang des Komparators COMP0 auf den Wert Eins gesetzt. Nachfolgend wird mit den derart erzeugten Signalen in der gleichen Weise verfahren, wie es vorstehend für den Komparator COMP0 beschrieben wurde. Dazu enthält die Steuereinheit 6 insgesamt Wmax Komparatoren COMPw (w = 0, 1,..., Wmax-1), mit denen die Steuersignale $inc_w(k)$ berechnet werden. Das aus dem Komparator COMP(Wmax-1) ausgegebene Signal wird nach dessen eventueller Erhöhung um den zu der jeweiligen Betriebsart korrespondierenden Wert dem Register REG als Initialisierungswert für den nächsten Verarbeitungszyklus k+1 zugeführt.

Aus den Wmax Steuersignalen $inc_w(k)$ werden in der Adressgenerierungseinheit 5 pro Verarbeitungszyklus k Wmax Adressen $pd_w(k)$ erzeugt. Dazu wird bei der ersten Aktivierung (k = 0) der Adressgenerierungseinheit 5 ein Initialisierungswert $pd_{ini}(k)$ gleich Null gesetzt. Die Adressen $pd_w(k)$ lassen sich nach folgender Gleichung berechnen:

$$pd_w(k) = (pd_{ini}(k) + \sum_{i=0}^{w-1} inc_i(k)) \bmod Vmax \qquad (9)$$

Aus Gleichung (9) lässt sich folgende rekursive Vorschrift herleiten:

$$pd_0(k) = pd_{ini}(k) \qquad (10)$$

$$pd_w(k) = (pd_{w-1}(k) + inc_{w-1}(k)) \bmod Vmax \qquad (11)$$

$$pd_{ini}(k+1) = (pd_{Wmax-1}(k) + inc_{Wmax-1}(k)) \bmod Vmax \qquad (12)$$

$$pd_{ini}(0) = 0 \qquad (13)$$

Um zu vermeiden, dass bei der Punktierung des an dem logischen Eingang des Zuordnungselements MUXw anliegenden Bits die logischen Ausgänge der Zuordnungselemente MUXw und MUX(w+1) demselben Register der Ausgangsregistereinheit REGout zugeordnet werden, ist in dem vorliegenden Ausführungsbeispiel vorgesehen, dass bei einer derartigen Punktierung ein Entscheider DECw (w = 0, 1,..., Wmax-1) die Adresse $pd_w(k)$ auf einen Wert setzt, welcher außerhalb des Wertebereichs für die Zuordnung zu den Registern der Ausgangsregistereinheit REGout liegt. Durch diese Maßnahme wird der logische Ausgang des Zuordnungselements MUXw bei der Punktierung des an seinem logischen Eingang anliegenden Bits de facto deaktiviert.

Das in Fig. 3 gezeigte Verfahren zur Berechnung der Adressen $pd_w(k)$ kann auch zur Berechnung der Adressen $ps_w(k)$ herangezogen werden. Dazu müssen lediglich sämtliche Steuersignale $inc_w(k)$ gleich Eins gesetzt werden. Als rekursive Berechnungsvorschrift ergibt sich folglich:

$$ps_0(k) = ps_{ini}(k) \qquad (14)$$

$$ps_w(k) = (ps_{w-1}(k) + 1) \bmod Vmax \qquad (15)$$

$$ps_{ini}(k+1) = (ps_{Wmax-1}(k) + 1) \bmod Vmax \qquad (16)$$

$$ps_{ini}(0) = 0 \qquad (17)$$

Die Besonderheit der in Fig. 3 dargestellten Architektur ist, dass durch sie mit nur einer Schaltung sowohl Widerholungsals auch Punktierungsalgorithmen realisiert werden können, obwohl diese Algorithmen einen fundamentalen strukturellen Unterschied aufweisen.

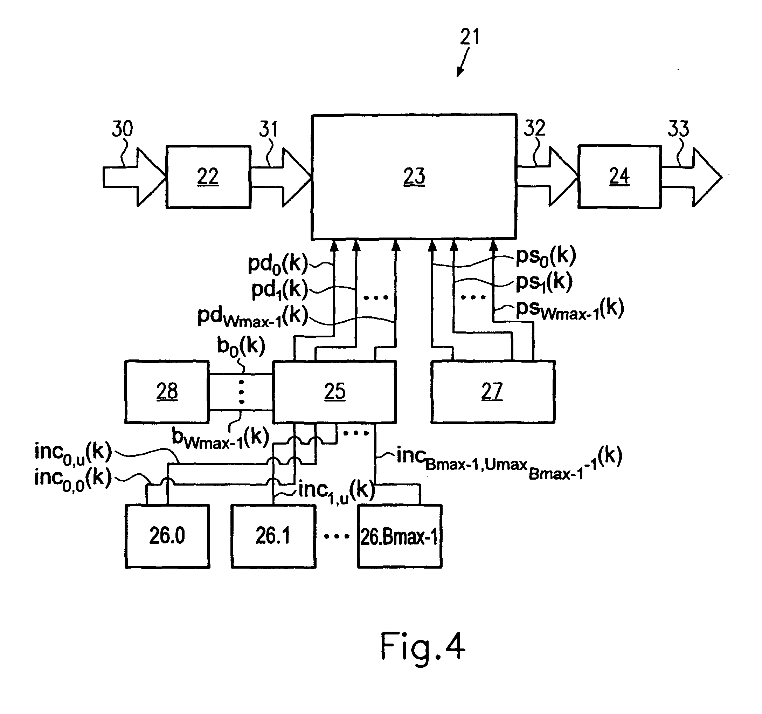

Die in Fig. 1 gezeigte Vorrichtung 1 lässt sich durch einfache Modifikationen derart auslegen, dass mehrere Teildatenströme b (b = 0, 1,..., Bmax-1), die ineinander verschachtelt sind, verarbeitet werden können. Ein schematisches Schaltbild einer derartigen Vorrichtung 21 ist in Fig. 4 als zweites Ausführungsbeispiel der erfindungsgemäßen Vorrichtung dargestellt.

Die Vorrichtung 21 umfasst analog zur Vorrichtung 1 einen Eingangsspeicher 22, eine Punktierungs-/Wiederholungseinheit 23 und einen Ausgangsspeicher 24. In den Eingangsspeicher 22 geht ein aus den Teildatenströmen b zusammengesetzter Datenstrom 30 ein. Von dort werden die Daten in Form von Datenwörtern 31 von der Punktierungs-/Wiederholungseinheit 23 ausgelesen. Nach der Verarbeitung in der Punktierungs-/Wiederholungseinheit 23 werden die verarbeiteten Daten als Datenwörter 32 in einem Ausgangsspeicher 24 zwischengespeichert und anschließend als Datenstrom 33 aus der Vorrichtung 21 ausgegeben.

Darüber hinaus weist die Vorrichtung 21 eine Adressgenerierungseinheit 25, eine Adressgenerierungseinheit 27, Steuereinheiten 26.b (b = 0, 1,..., Bmax-1) und eine Selektionseinheit 28 auf. Die Anzahl Bmax der Steuereinheiten 26.b ist gleich der Anzahl Bmax der zu verarbeitenden Teildatenströme b. Jede der Steuereinheiten 26.b erzeugt Steuersignale $inc_{b,u}(k)$ (b = 0, 1,..., Bmax-1; u = 0, 1,..., $Umax_b$-1) für jeweils einen der Teildatenströme b, wobei der Index u das jeweils zugehörige Zuordnungselement MUXu bezeichnet. Dabei wurde berücksichtigt, dass eventuell jeder der Teildatenströme b unterschiedliche Datenbreiten $Umax_b$ aufweist. Die Selektionseinheit 28 stellt in jedem Verarbeitungszyklus k fest, zu welchem Teildatenstrom b die an den logischen Eingängen der Zuordnungselemente MUXw anliegenden Bits gehören. Dementsprechend generiert die Selektionseinheit 28 Steuersignale $b_w(k)$ (w = 0, 1,..., Wmax-1), durch welche die entsprechenden von den Steuereinheiten 26.b generierten Steuersignale $inc_{b,u}(k)$ ausgewählt werden und anschließend für die Generierung der Adressen $pd_w(k)$ verwendet werden.

Die in Fig. 4 gezeigte Vorrichtung 21 kann beispielsweise im 3GPP-Standard genutzt werden, in welchem sogenanntes "bit separation" und "bit collection" durchgeführt wird.

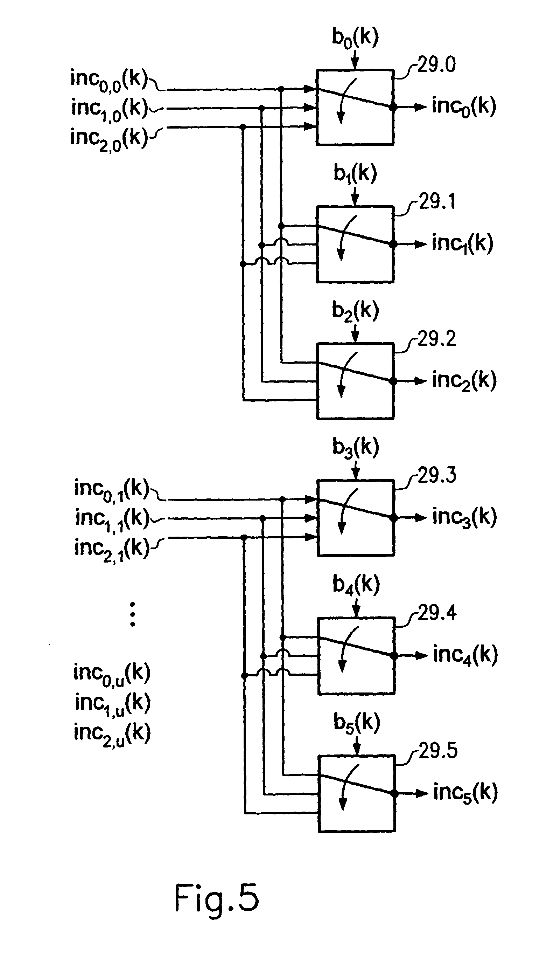

In Fig. 5 ist schematisch ein Ausschnitt aus der in Fig. 4 gezeigten Adressgenerierungseinheit 25 für den Fall Bmax = 3 dargestellt. Schalteinheit 29.w (w = 0, 1,..., Wmax-1) erzeugen mittels der Steuersignale $inc_{b,u}(k)$ und $b_w(k)$ die für die Zuordnungselemente MUXw benötigten Steuersignale $inc_w(k)$.

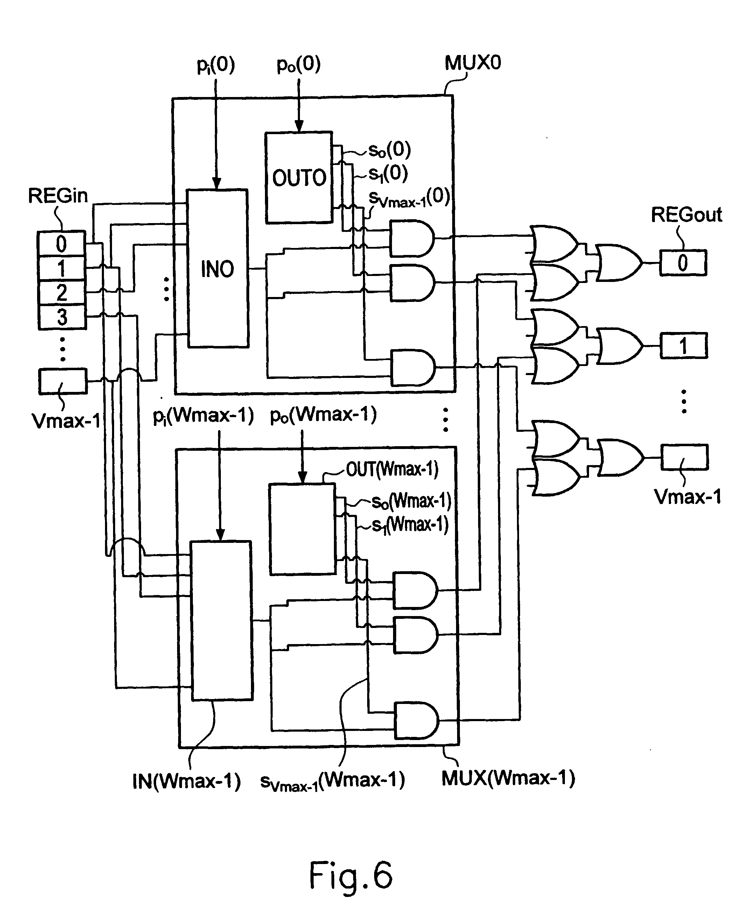

In Fig. 6 ist beispielhaft dargestellt, wie die Zuordnungselemente MUXw realisiert werden können. Jedes Zuordnungselement MUXw weist jeweils einen Eingangsmultiplexer INw und einen Ausgangsdecoder OUTw auf (w = 0, 1,..., Wmax-1). Die Eingänge jedes Eingangsmultiplexers INw sind mit den Registern der Eingangsregistereinheit REGin verbunden. Anhand der Eingangsadresse $p_i(w)$ selektiert ein Eingangsmultiplexer INw das gültige Register der Eingangsregistereinheit REGin. Der Ausgangsdecoder OUTw generiert mittels der Ausgangsadresse $p_o(w)$ Vmax Steuersignale $s_v(w)$ (v = 0, 1,..., Vmax-1). Durch UND-Verknüpfungen der Steuersignale $s_v(w)$ mit dem Ausgangssignal des Eingangsmultiplexers INw wird das selektierte Register der Eingangsregistereinheit REGin einem der Register der Ausgangsregistereinheit REGout zugeordnet.

Jedem Register der Ausgangsregistereinheit REGout sind ODER-Verknüpfungen vorgeschaltet, welche die Ausgänge der Zuordnungselemente MUXw miteinander kombiniert. Dabei wird durch die oben beschriebene Adressgenerierung gewährleistet, dass keines der Register gleichzeitig von mehreren Zuordnungselementen MUXw überschrieben wird.

Sofern die gültigen Adressen $p_o(w)$ Werte von 0 bis Vmax-1 durchlaufen, gilt für die Steuersignale $s_v(w)$ die Vorschrift $s_v(w) = 1$, wenn $p_o(w) = v$ gilt. Ansonsten lautet die Vorschrift $s_v(w) = 0$. Dies stellt sicher, dass im Falle einer ungültigen Adresse der Ausgang des jeweiligen Zuordnungselements MUXw keinem Register der Ausgangsregistereinheit REGout zugeordnet wird.

**Patentansprüche**

**1.** Vorrichtung (1; 21) zur Ausgabe eines mehrere Bits umfassenden Eingangsdatenblocks (10; 30) als Ausgangsdatenblock (13; 33) mit mindestens einer Punktierung oder mit mindestens einer Wiederholung mindestens eines Bits, wobei der Eingangsdatenblock (10; 30) mehrere Eingangsdatenwörter (11; 31) mit jeweils mehreren Bits und der Ausgangsdatenblock (13; 33) den Eingangsdatenwörtern (11; 31) zugeordnete Ausgangsdatenwörter (12; 32) enthalten, mit einer Zuordnungseinheit (3; 23) zur Zuordnung der Bits eines Eingangsdatenworts (11; 31) zu den Bits des zugeordneten Ausgangsdatenworts (12; 32) anhand eines veränderbaren Punktierungs- oder Wiederholungsmusters ($inc_w(k)$), wobei die Zuordnungseinheit (3; 23) eine Hardware-Schaltung ist, die zur Ausführung sowohl einer Punktierung als auch einer Wiederholungscodierung ausgelegt ist, und die Zuordnungseinheit (3; 23) eine Mehrzahl von Zuordnungselementen (MUXw) mit jeweils einem logischen Eingang und einem logischen Ausgang zur Zuordnung eines Bits eines Eingangsdatenworts (11; 31) zu einem oder keinem Bit des zugeordneten Ausgangsdatenworts (12; 32) aufweist,
**gekennzeichnet durch**

- eine Steuereinheit (6; 26.b) zur Erzeugung des Punktierungs- oder Wiederholungsmusters ($inc_w(k)$) anhand vorgegebener Punktierungs- oder Wiederholungsinformationen, und
- eine erste Adressgenerierungseinheit (5; 25) zur Erzeugung von ersten Adressen ($pd_w(k)$) für die logischen Ausgänge ($p_o(w)$) der Zuordnungselemente (MUXw) zur jeweiligen Zuordnung zu einem Bit des Ausgangsdatenworts (12; 32) anhand des Punktierungsmusters ($inc_w(k)$) und zur Erzeugung von ersten Adressen ($pd_w(k)$) für die logischen Eingänge ($p_i(w)$) der Zuordnungselemente (MUXw) zur jeweiligen Zuordnung zu einem Bit des Eingangsdatenworts (11; 31) anhand des Wiederholungsmusters ($inc_w(k)$).

2. Vorrichtung (1; 21) nach Anspruch 1,
   **gekennzeichnet durch**

   - eine zweite Adressgenerierungseinheit (7; 27) zur Erzeugung von zweiten Adressen ($ps_w(k)$) für die logischen Eingänge ($p_i(w)$) der Zuordnungselemente (MUXw) zur fortlaufenden Zuordnung zu jeweils einem Bit des Eingangsdatenworts (11; 31) beim Betrieb der Vorrichtung (1; 21) als Punktierungsvorrichtung und zur Erzeugung von zweiten Adressen ($ps_w(k)$) für die logischen Ausgänge ($p_o(w)$) der Zuordnungselemente (MUXw) zur fortlaufenden Zuordnung zu jeweils einem Bit des Ausgangsdatenworts (12; 32) beim Betrieb der Vorrichtung (1; 21) als Wiederholungsvorrichtung.

3. Vorrichtung (1; 21) nach einem oder mehreren der vorhergehenden Ansprüche,
   **gekennzeichnet durch**

   - einen Eingangsspeicher zur Zwischenspeicherung mindestens eines Eingangsdatenworts (11; 31), insbesondere in Form von einer Mehrzahl von Registern, welche jeweils zur Speicherung eines Bits ausgelegt sind, und/oder
   - einen Ausgangsspeicher zur Zwischenspeicherung mindestens eines Ausgangsdatenworts (12; 32), insbesondere in Form von einer Mehrzahl von Registern, welche jeweils zur Speicherung eines Bits ausgelegt sind.

4. Vorrichtung (1; 21) nach Anspruch 3,
   **dadurch gekennzeichnet,**

   - **dass** dem Eingangsspeicher ein erster wiederbeschreibbarer Speicher (2; 22) zur Speicherung von Eingangsdatenblöcken (10; 30) vorgeschaltet ist, und/oder
   - **dass** dem Ausgangsspeicher ein zweiter wiederbeschreibbarer Speicher (4; 24) zur Speicherung von Ausgangsdatenblöcken (13; 33) nachgeschaltet ist.

5. Vorrichtung (21) nach einem oder mehreren der Ansprüche 2 bis 4,
   **gekennzeichnet durch**

   - eine Mehrzahl von Steuereinheiten (26.b).

6. Vorrichtung (1; 21) nach einem oder mehreren der Ansprüche 2 bis 5,
   **dadurch gekennzeichnet,**

   - **dass** die Steuereinheiten (6; 26.b), die erste Adressgenerierungseinheit (5; 25) und die zweite Adressgenerierungseinheit (7; 27) jeweils hardwaremäßig ausgelegt sind.

7. Vorrichtung (1; 21) nach einem oder mehreren der Ansprüche 2 bis 6,
   **dadurch gekennzeichnet,**

- **dass** die Steuereinheiten (6; 26.b) ein Punktierungs- oder Wiederholungsmuster ($inc_w(k)$) nach dem UMTS-Standard 3GPP TS 25.212 erzeugen.

8. Verfahren zum Betrieb einer Vorrichtung (1; 21) zur Ausgabe eines mehrere Bits umfassenden Eingangsdatenblocks (10; 30) als Ausgangsdatenblock (13; 33) mit mindestens einer Punktierung oder mit mindestens einer Wiederholung mindestens eines Bits, wobei der Eingangsdatenblock (10; 30) mehrere Eingangsdatenwörter (11; 31) mit jeweils mehreren Bits und der Ausgangsdatenblock (13; 33) den Eingangsdatenwörtern (11; 31) zugeordnete Ausgangsdatenwörter (12; 32) enthalten, mit einer Zuordnungseinheit (3; 23) zur Zuordnung der Bits eines Eingangsdatenworts (11; 31) zu den Bits des zugeordneten Ausgangsdatenworts (12; 32) anhand eines veränderbaren Punktierungs- oder Wiederholungsmusters ($inc_w(k)$), wobei die Zuordnungseinheit (3; 23) eine Hardware-Schaltung ist, die zur Ausführung sowohl einer Punktierung als auch einer Wiederholungscodierung ausgelegt ist, und die Zuordnungseinheit (3; 23) eine Mehrzahl von Zuordnungselementen (MUXw) mit jeweils einem logischen Eingang und einem logischen Ausgang zur Zuordnung eines Bits eines Eingangsdatenworts (11; 31) zu einem oder keinem Bit des zugeordneten Ausgangsdatenworts (12; 32) aufweist, mit einer Steuereinheit (6; 26.b) zur Erzeugung des Punktierungs- oder Wiederholungsmusters ($inc_w(k)$) anhand vorgegebener Punktierungs- oder Wiederholungsinformationen, und einer erste Adressgenerierungseinheit (5; 25) zur Erzeugung von ersten Adressen ($pd_w(k)$) für die logischen Ausgänge ($p_o(w)$) der Zuordnungselemente (MUXw) zur jeweiligen Zuordnung zu einem Bit des Ausgangsdatenworts (12; 32) anhand des Punktierungsmusters ($inc_w(k)$) und zur Erzeugung von ersten Adressen ($pd_w(k)$) für die logischen Eingänge ($p_i(w)$) der Zuordnungselemente (MUXw) zur jeweiligen Zuordnung zu einem Bit des Eingangsdatenworts (11; 31) anhand des Wiederholungsmusters ($inc_w(k)$), wobei

- die Vorrichtung (1; 21) Wmax Zuordnungselemente MUXw (w = 0, 1,..., Wmax-1) aufweist,
- das Eingangsdatenwort (11; 31) Lmax Bits aufweist,
- die Vorrichtung (1; 21) in Zyklen k (k = 0, 1, 2,...) betrieben wird, wobei in jedem Zyklus k von der Steuereinheit (6; 26.b) Wmax Steuersignale $inc_w(k)$ und von der ersten Adressgenerierungseinheit (5; 25) eine erste Adresse $pd_w(k)$ für jedes Zuordnungselement MUXw erzeugt werden, und
- eine erste Initialisierungsadresse $pd_{ini}(k)$ zur Initialisierung des Zyklus k verwendet wird,

mit einer Berechnung der ersten Adressen $pd_w(k)$ nach folgender rekursiver Vorschrift:

$$pd_0(k) = pd_{ini}(k) \tag{1}$$

$$pd_w(k) = (pd_{w-1}(k) + inc_{w-1}(k)) \bmod Lmax \tag{2}$$

$$pd_{ini}(k+1) = (pd_{Wmax-1}(k) + inc_{Wmax-1}(k)) \bmod Lmax \tag{3}$$

$$pd_{ini}(0) = 0 \tag{4},$$

wobei $inc_w(k) = 0$ angibt, dass das an dem Eingang des Zuordnungselements MUXw anliegende Bit punktiert bzw. wiederholt werden soll, und $inc_w(k) = 1$ angibt, dass das an dem Eingang des Zuordnungselements MUXw anliegende Bit nicht punktiert und nicht wiederholt werden soll, und wobei bei einer Punktierung des an dem Eingang des Zuordnungselements MUXw anliegende Bits der logische Ausgang ($p_o(w)$) des Zuordnungselements MUXw gesperrt wird.

9. Verfahren nach Anspruch 8,
**dadurch gekennzeichnet,**

- **dass** in jedem Zyklus k von der zweiten Adressgenerierungseinheit (7; 27) eine zweite Adresse $ps_w(k)$ für jedes Zuordnungselement MUXw erzeugt wird,
- **dass** eine zweite Initialisierungsadresse $ps_{ini}(k)$ zur Initialisierung des Zyklus k verwendet wird, und
- **dass** die zweiten Adressen $ps_w(k)$ nach folgender rekursiver Vorschrift berechnet werden:

$$ps_0(k) = ps_{ini}(k) \qquad (5)$$

$$ps_w(k) = (ps_{w-1}(k) + 1) \bmod Lmax \qquad (6)$$

$$ps_{ini}(k+1) = (ps_{Wmax-1}(k) + 1) \bmod Lmax \qquad (7)$$

$$ps_{ini}(0) = 0 \qquad (8).$$

## Claims

1. Apparatus (1; 21) for outputting an input data block (10; 30) comprising a plurality of bits as an output data block (13; 33) with at least one puncturing or with at least one repetition of at least one bit, where the input data block (10; 30) contains a plurality of input data words (11; 31) having a respective plurality of bits, and the output data block (13; 33) contains output data words (12; 32) associated with the input data words (11; 31), having an association unit (3; 23) for associating the bits in an input data word (11; 31) with the bits in the associated output data word (12; 32) on the basis of an alterable puncturing or repetition pattern ($inc_w(k)$), the association unit (3; 23) being a hardware circuit which is designed to execute both puncturing and repetitive coding, and the association unit (3; 23) having a plurality of association elements (MUXw) which each have a logic input and a logic output for associating a bit in an input data word (11; 31) with one or no bit in the associated output data word (12; 32), **characterized by**

   - a control unit (6; 26.b) for producing the puncturing or repetition pattern ($inc_w(k)$) on the basis of prescribed puncturing or repetition information, and
   - a first address generation unit (5; 25) for producing first addresses ($pd_w(k)$) for the logic outputs ($p_o(w)$) of the association elements (MUXw) for respective association with a bit in the output data word (12; 32) on the basis of the puncturing pattern ($inc_w(k)$) and for producing first addresses ($pd_w(k)$) for the logic inputs ($p_i(w)$) of the association elements (MUXw) for respective association with a bit in the input data word (11; 31) on the basis of the repetition pattern ($inc_w(k)$).

2. Apparatus (1; 21) according to Claim 1, **characterized by**

   - a second address generation unit (7; 27) for producing second addresses ($ps_w(k)$) for the logic inputs ($p_i(w)$) of the association elements (MUXw) for continuous association with a respective bit in the input data word (11; 31) when the apparatus (1; 21) is operated as a puncturing apparatus, and for producing second addresses ($ps_w(k)$) for the logic outputs ($p_o(w)$) of the association elements (MUXw) for continuous association with a respective bit in the output data word (12; 32) when the apparatus (1; 21) is operated as a repetition apparatus.

3. Apparatus (1; 21) according to one or more of the preceding claims, **characterized by**

   - an input memory for buffer-storing at least one input data word (11; 31), particularly in the form of a plurality of registers which are respectively designed to store a bit, and/or
   - an output memory for buffer-storing at least one output data word (12; 32), particularly in the form of a plurality of registers which are respectively designed to store a bit.

4. Apparatus (1; 21) according to Claim 3, **characterized**

   - **in that** the input memory has a first rewriteable memory (2; 22) connected upstream of it for storing input data blocks (10; 30), and/or
   - **in that** the output memory has a second rewriteable memory (4; 24) connected downstream of it for storing output data blocks (13; 33).

5. Apparatus (21) according to one or more of Claims 2 to 4,
   **characterized by**

   - a plurality of control units (26.b).

6. Apparatus (1; 21) according to one or more of Claims 2 to 5,
   **characterized**

   - **in that** the control units (6; 26.b), the first address generation unit (5; 25) and the second address generation unit (7; 27) are each designed as hardware.

7. Apparatus (1; 21) according to one or more of Claims 2 to 6,
   **characterized**

   - **in that** the control units (6; 26.b) produce a puncturing or repetition pattern ($inc_w(k)$) based on the UMTS standard 3GPP TS 25.212.

8. Method for operating an apparatus (1; 21) for outputting an input data block (10; 30) comprising a plurality of bits as an output data block (13; 33) with at least one puncturing or with at least one repetition of at least one bit, where the input data block (10; 30) contains a plurality of input data words (11; 31) having a respective plurality of bits, and the output data block (13; 33) contains output data words (12; 32) associated with the input data words (11; 31), having an association unit (3; 23) for associating the bits in an input data word (11; 31) with the bits in the associated output data word (12; 32) on the basis of an alterable puncturing or repetition pattern ($inc_w(k)$), the association unit (3; 23) being a hardware circuit which is designed to execute both puncturing and repetitive coding, and the association unit (3; 23) having a plurality of association elements (MUXw) which each have a logic input and a logic output for associating a bit in an input data word (11; 31) with one or no bit in the associated output data word (12; 32), having a control unit (6; 26.b) for producing the puncturing or repetition pattern ($inc_w(k)$) on the basis of prescribed puncturing or repetition information, and a first address generation unit (5; 25) for producing first addresses ($pd_w(k)$) for the logic outputs ($p_o(w)$) of the association elements (MUXw) for respective association with a bit in the output data word (12; 32) on the basis of the puncturing pattern ($inc_w(k)$) and for producing first addresses ($pd_w(k)$) for the logic inputs ($p_i(w)$) of the association elements (MUXw) for respective association with a bit in the input data word (11; 31) on the basis of the repetition pattern ($inc_w(k)$), where

   - the apparatus (1; 21) has Wmax association elements MUXw (w = 0, 1, ..., Wmax-1),
   - the input data word (11; 31) has Lmax bits,
   - the apparatus (1; 21) is operated in cycles k (k = 0, 1, 2, ...), with the control unit (6; 26b) producing Wmax control signals ($inc_w(k)$) in each cycle k and the first address generation unit (5; 25) producing a first address $pd_w(k)$ for each association element MUXw, and
   - a first initialization address $pd_{ini}(k)$ is used to initialize the cycle k,

   the first addresses $pd_w(k)$ being calculated on the basis of the following recursive rules:

$$pd_0(k) = pd_{ini}(k) \tag{1}$$

$$pd_w(k) = (pd_{w-1}(k) + inc_{w-1}(k)) \bmod Lmax \tag{2}$$

$$pd_{ini}(k+1) = (pd_{Wmax-1}(k) + inc_{Wmax-1}(k)) \bmod Lmax \tag{3}$$

$$pd_{ini}(0) = 0 \tag{4}$$

where $inc_w(k) = 0$ indicates that the bit applied to the input of the association element MUXw needs to be punctured or repeated, and $inc_w(k) = 1$ indicates that the bit applied to the input of the association element MUXw does not need to be punctured and doesn't need to be repeated, and where puncturing the bit applied to the input of the association element MUXw involves the logic output ($p_o(w)$) of the association element MUXw being disabled.

9. Method according to Claim 8, **characterized**

- **in that** in each cycle k the second address generation unit (7; 27) produces a second address $ps_w(k)$ for each association element MUXw,
- **in that** a second initialization address $ps_{ini}(k)$ is used to initialize the cycle k, and
- **in that** the second addresses $ps_w(k)$ are calculated on the basis of the following recursive rules:

$$ps_0(k) = ps_{ini}(k) \tag{5}$$

$$ps_w(k) = (ps_{w-1}(k) + 1) \bmod Lmax \tag{6}$$

$$ps_{ini}(k+1) = (ps_{Wmax-1}(k) + 1) \bmod Lmax \tag{7}$$

$$ps_{ini}(0) = 0 \tag{8}.$$

**Revendications**

1. Dispositif (1, 21) d'émission d'un bloc (10, 30) de données d'entrée comprenant plusieurs bits sous forme de blocs (13, 33) de données de sortie ayant au moins une perforation ou ayant au moins une répétition d'au moins un bit, le bloc (10, 30) de données d'entrée contenant plusieurs mots (11, 31) de données d'entrée ayant, respectivement, plusieurs bits et le bloc (13, 33) de données de sortie contenant des mots (12, 32) de données de sortie associés aux mots (11, 31) de données d'entrée, comprenant une unité (3, 23) d'association des bits d'un mot (11, 31) de données d'entrée aux bits du mot (12, 32) de données de sortie associés au moyen d'un modèle ($inc_w(k)$) modifiable de perforation ou de répétition, l'unité (3, 23) d'association étant un circuit matériel qui est conçu pour réaliser tant une perforation qu'également un codage de répétition et l'unité (3, 23) d'association ayant une multiplicité d'éléments (MUXw) d'association ayant, respectivement, une entrée logique et une sortie logique pour l'association d'un bit d'un mot (11, 31) de données d'entrée à un bit ou à aucun bit du mot (12, 32) de données de sortie associé, **caractérisé par**

- une unité (6, 26.b) de commande pour la production du modèle ($inc_w(k)$) de perforation ou de répétition au moyen d'informations prescrites de perforation ou de répétition, et
- une première unité (5, 25) de génération d'adresses pour produire des premières adresses ($pd_w(k)$) pour les sorties ($p_o(w)$) logiques des éléments (MUXw) d'association pour l'association respective à un bit du mot (12, 32) de données de sortie au moyen du modèle ($inc_w(k)$) de perforation et pour la production de premières adresses ($pd_w(k)$) pour les entrées ($p_i(w)$) logiques des éléments (MUXw) d'association pour l'association respective à un bit du mot (11, 31) de données d'entrée au moyen du modèle ($inc_w(k)$) de répétition.

2. Dispositif (1, 21) suivant la revendication 1, **caractérisé par**

- une deuxième unité (7, 27) de génération d'adresses pour la production de deuxièmes adresses ($ps_w(k)$) pour les entrées ($p_i(w)$) logiques des éléments (MUXw) d'association pour l'association continue à, respectivement, un bit du mot (11, 31) de données d'entrée lors du fonctionnement du dispositif (1, 21) en dispositif de perforation et pour la production de deuxièmes adresses ($ps_w(k)$) pour les sorties ($p_o(w)$) logiques des éléments (MUXw) d'association pour l'association continue à, respectivement, un bit du mot (12, 32) de données de sortie lors du fonctionnement du dispositif (1, 21) en dispositif de répétition.

EP 1 476 977 B1

3. Dispositif (1, 21) suivant l'une ou plusieurs des revendications précédentes,
**caractérisé par**

- une mémoire d'entrée pour mémoriser intermédiairement au moins un mot (11, 31) de données d'entrée, notamment sous la forme d'une multiplicité de registres qui sont conçus, respectivement, pour la mémorisation d'un bit, et/ou
- une mémoire de sortie pour la mémorisation intermédiaire d'au moins un mot (12, 32) de données de sortie, notamment sous la forme d'une multiplicité de registres qui sont conçus, respectivement, pour la mémorisation d'un bit.

4. Dispositif (1, 21) suivant la revendication 3,
**caractérisé**

- **en ce qu'**il est monté en amont de la mémoire d'entrée une première mémoire (2, 22) dans laquelle on peut réécrire pour la mémorisation de blocs (10, 30) de données d'entrée, et/ou
- **en ce qu'**il est monté en aval de la mémoire de sortie une deuxième mémoire (4, 24) dans laquelle on peut réécrire pour la mémorisation de blocs (13, 33) de données de sortie.

5. Dispositif (21) suivant l'une ou plusieurs des revendications 2 à 4,
**caractérisé par**

- une multiplicité d'unités (26.b) de commande.

6. Dispositif (1, 21) suivant l'une ou plusieurs des revendications 2 à 5,
**caractérisé**

- **en ce que** les unités (6, 26.b) de commande, la première unité (5, 25) de production d'adresses et la deuxième unité (7, 27) de production d'adresses sont conçues, respectivement, en matériel.

7. Dispositif (1, 21) suivant l'une ou plusieurs des revendications 2 à 6,
**caractérisé**

- **en ce que** les unités (6, 26.b) de commande produisent un modèle ($inc_w(k)$) de perforation ou de répétition suivant la norme UMTS 3GPP TS 25.212.

8. Procédé pour faire fonctionner un dispositif (1, 21) d'émission d'un bloc (10, 30) de données d'entrée comprenant plusieurs bits sous la forme d'un bloc (13, 33) de données de sortie et ayant au moins une perforation ou ayant au moins une répétition d'au moins un bit, le bloc (10, 30) de données d'entrée contenant plusieurs mots (11, 31) de données d'entrée ayant, respectivement, plusieurs bits et le bloc (13, 33) de données de sortie contenant les mots (12, 32) de données de sortie associés aux mots (11, 31) de données d'entrée comprenant une unité (3, 23) d'association des bits d'un mot (11, 31) de données d'entrée aux bits du mot (12, 32) de données de sortie associés au moyen d'un modèle ($inc_w(k)$) modifiable de perforation ou de répétition, l'unité (3, 23) d'association étant un circuit matériel qui est conçu pour réaliser tant une perforation qu'également un codage de répétition et l'unité (3, 23) d'association ayant une multiplicité d'éléments (MUXw) d'association ayant, respectivement, une entrée logique et une sortie logique pour l'association d'un bit d'un mot (11, 31) de données d'entrée à un bit ou à aucun bit du mot (12, 32) de données de sortie associé, une unité (6, 26.b) de commande pour la production du modèle ($inc_w(k)$) de perforation ou de répétition au moyen d'information prescrite de perforation ou de répétition, et une première unité (5, 25) de génération d'adresses pour produire des premières adresses ($pd_w(k)$) pour les sorties ($p_o(w)$) logiques des éléments (MUXw) d'association pour l'association respective à un bit du mot (12, 32) de données de sortie au moyen du modèle ($inc_w(k)$) de perforation et pour la production de premières adresses ($pd_w(k)$) pour les entrées ($p_i(w)$) logiques des éléments (MUXw) d'association pour l'association respective à un bit du mot (11, 31) de données d'entrée au moyen du modèle ($inc_w(k)$) de répétition, dans lequel

- le dispositif (1, 21) a Wmax éléments MUXw d'association (w = 0, 1, ..., Wmax-1),
- le mot (11, 31) de données d'entrée a Lmax bits,
- le dispositif (1, 21) fonctionne en cycle k (k = 0, 1, 2, ...) alors que, dans chaque cycle k, il est produit par l'unité (6, 26.b) de commande Wmax signaux $inc_w(k)$ de commande et par la première unité (5, 25) de génération d'adresses une première adresse $pd_w(k)$ pour chaque élément MUXw d'association, et

- on utilise une première adresse $pd_{ini}(k)$ d'initialisation pour initialiser le cycle k,

comportant un calcul de la première adresse $pd_w(k)$ suivant la prescription récursive suivante :

$$pd_o(k) = pd_{ini}(k) \qquad (1)$$

$$pd_w(k) = (pd_{w-1}(k) + inc_{w-1}(k)) \bmod L_{max} \qquad (2)$$

$$pd_{ini}(k+1) = (pd_{wmax-1}(k) + inc_{wmax-1}(k)) \bmod L_{max} \qquad (3)$$

$$pd_{ini}(0) = 0 \qquad (4),$$

dans lesquelles $inc_w(k) = 0$ indique que le bit se trouvant à l'entrée de l'élément MUXw d'association doit être perforé ou répété et $inc_w(k) = 1$ indique que le bit se trouvant à l'entrée de l'élément MUXw d'association ne doit pas être perforé et ne doit pas être répété, et dans lequel on bloque une perforation du bit s'appliquant à l'entrée de l'élément MUXw d'association à la sortie ($p_o(w)$) logique de l'élément MUXw d'association.

9.  Procédé suivant la revendication 8,
      **caractérisé**

- **en ce que**, dans chaque cycle k, il est produit par la deuxième unité (7, 27) de génération d'adresses une deuxième adresse $ps_w(k)$ pour chaque élément MUXw d'association,
- **en ce que** l'on utilise une deuxième adresse $ps_{ini}(k)$ d'initialisation pour l'initialisation du cycle k, et
- **en ce que** l'on calcule la deuxième adresse $ps_w(k)$ par la prescription récursive suivante :

$$ps_o(k) = ps_{ini}(k) \qquad (5)$$

$$ps_w(k) = (ps_{w-1}(k) + 1) \bmod L_{max} \qquad (6)$$

$$ps_{ini}(k+1) = (ps_{wmax-1}(k) + 1) \bmod L_{max} \qquad (7)$$

$$ps_{ini}(0) = 0 \qquad (8).$$

Fig.1

Fig.2

EP 1 476 977 B1

Fig.3

EP 1 476 977 B1

Fig.4

Fig.5

Fig.6